# EUROPÄISCHE PATENTSCHRIFT

(11) **EP 2 564 462 B1**
(45) Veröffentlichungstag und Bekanntmachung des Hinweises auf die Patenterteilung: **14.02.2018**
(21) Anmeldenummer: 11706233.1
(22) Anmeldetag: 28.02.2011
(51) Int. Cl.: H01M 2/10, H01M 10/613, H01M 10/625, H01M 10/6554

(54) **BATTERIE MIT EINER KÜHLPLATTE UND KRAFTFAHRZEUG MIT EINER ENTSPRECHENDEN BATTERIE**
BATTERY WITH COOLING PLATE AND VEHICLE WITH SUCH A BATTERY
BATTÉRIE AVEC UNE PLAQUE DE REFROIDISSEMENT ET VÉHICULE AVEC UNE BATTÉRIE CONFORME

(30) Priorität: 26.04.2010 DE 102010028194
(43) Veröffentlichungstag der Anmeldung: 06.03.2013
(73) Patentinhaber: Samsung SDI Co., Ltd., Gyeonggi-do (KR); Robert Bosch GmbH, 70442 Stuttgart (DE)
(72) Erfinder: GENDLIN, Boris, 70794 Filderstadt (DE); DILL, Marc, 70176 Stuttgart (DE); ANGERBAUER, Ralf, 71696 Möglingen (DE); BUBECK, Conrad, 73728 Esslingen (DE); RUEHLE, Andreas, 70374 Stuttgart (DE)
(74) Vertreter: Bee, Joachim
(86) Internationale Anmeldenummer: PCT/EP2011/052888
(87) Internationale Veröffentlichungsnummer: WO 2011/134697

(56) Entgegenhaltungen:
- DE-A1-102005 031 504
- DE-A1-102008 010 813
- DE-A1-102008 034 869
- DE-A1-102008 034 885
- JP-A- 2005 285 456

## Beschreibung

Die vorliegende Erfindung betrifft eine Batterie mit einer Kühlplatte und ein Kraftfahrzeug mit dieser Batterie, wobei die Batterie durch die Ausgestaltung eines Befestigungssystems eine besonders effiziente Montage und Kühlung erlaubt.

### Stand der Technik

Es ist bekannt, Batteriemodule mit ihrer Unterseite auf einer Oberseite einer Kühlplatte anzuordnen. Dabei sind Bohrungen in der Kühlplatte angeordnet und die Batteriemodule mittels Verschraubungen mit der Kühlplatte verbunden. Nachteilig hierbei ist, dass ein Anbringen der Verschraubungen von einer Unterseite der Kühlplatte her erfolgen muss, was einen Montageprozess verkompliziert. Zudem ist ein definierter Anpressdruck der Batteriemodule auf die Kühlplatte nur verhältnismäßig aufwendig über eine Ermittlung des Widerstandsmoments der Schrauben beim Eindrehen zu realisieren. Der Anpressdruck sollte eine definierte Größe erreichen, damit ein thermischer Übergangswiderstand zwischen den Batteriemodulen und der Kühlplatte möglichst gering ist.

Eine weitere Möglichkeit der Anordnung ist aus der DE 10 2007 063 187 B3 bekannt. Diese zeigt eine Batterie, insbesondere für hybridgetriebene Kraftfahrzeuge, welche bei Unfällen zur gezielten Kraftübertragung genutzt werden können soll, einfach herstellbar sein und ein geringes Gewicht aufweisen soll. Dazu ist mittelbar oder unmittelbar über den Zellen, also polseitig, eine Kraftverteilerplatte angeordnet, die dazu dient, bei Unfällen auftretende Kräfte in Zellrichtung der Batterie zunächst so zu verteilen, dass die verteilten Kräfte durch Hüllen von Zellen und durch einen Kühligel zur Kühlplatte geleitet werden.

Es ist zudem bekannt, mittels Haltebändern mehrere Batteriezellen zu einem Batteriemodul zu verbinden, wie es beispielsweise aus US 6 512 347 B1 oder der JP 2005 285456 hervorgeht. Die mehreren Batteriezellen werden damit zwar zueinander positioniert, eine Fixierung der Batteriemodule auf einer Kühlplatte ist damit jedoch nicht vorgesehen.

Zudem ist durch die Druckschriften DE 2008 010 813 A1, DE 2008 034 869 A1 oder DE 2008 034 885 A1 die Möglichkeit bekannt, einzelne aneinander gereihte Batteriezellen mittels Spannelementen auf einer Kühlplatte zu fixieren. Diese Anordnung hat jedoch den Nachteil, dass die einzelnen Batteriezellen unterschiedlich stark an die Kühlplatte gepresst sind und deren Wärme damit unterschiedlich gut abgeleitet werden kann. So sind die Batteriezellen an den Enden der Aneinanderreihung stärker auf die Kühlplatte gepresst, als Batteriezellen mittig in der Aneinanderreihung.

Eine dritte Möglichkeit der Anordnung und Befestigung offenbart die Druckschrift DE 10 2008 034869 A1.

### Offenbarung der Erfindung

Erfindungsgemäß wird eine Batterie zur Verfügung gestellt, welche wenigstens ein mehrere Batteriezellen aufweisendes Batteriemodul mit einer Unterseite, einer Kühlplatte mit einer Oberseite und einem auf der Oberseite der Kühlplatte angeordneten und mit der Kühlplatte verbundenen Befestigungssystem für das wenigstens eine Batteriemodul umfasst, wobei das Befestigungssystem wenigstens ein Fixierband aufweist und mittels des wenigstens einen Fixierbandes das wenigstens eine Batteriemodul derart auf der Kühlplatte befestigt ist, dass die Unterseite des Batteriemoduls in direktem Kontakt mit der Oberseite der Kühlplatte steht, dadurch gekennzeichnet, dass die Kühlplatte wenigstens zwei zueinander beabstandete Aussparungen aufweist, welche jeweils als eine von der Oberseite der Kühlplatte zu einer Unterseite der Kühlplatte durch die Kühlplatte hindurch verlaufende Öffnung ausgebildet sind, wobei die Unterseite der Kühlplatte an einer zu der Oberseite gegenüberliegende Seite der Kühlplatte angeordnet ist und das wenigstens eine Fixierband durch die als Öffnung ausgebildete Aussparungen in der Weise durch die Kühlplatte hindurch geführt ist, dass ein Abschnitt des wenigstens einen Fixierbandes oberhalb der Kühlplatte und mindestens ein weiterer Abschnitt des wenigstens einen Fixierbandes unterhalb der Kühlplatte angeordnet ist. Hiermit ist es vorteilhaft ermöglicht, Batteriemodule auf der Kühlplatte anzuordnen, ohne dass die Unterseite der Kühlplatte zugänglich sein muss. Während einer Montage der erfindungsgemäßen Batterie muss die Kühlplatte nun nicht mehr gedreht werden, wodurch der Montageprozess vereinfacht ist. Mittels des Fixierbandes können Batteriemodule vorteilhaft mit wenigen Handgriffen einfach und schnell fixiert werden. So kann die erfindungsgemäße Batterie einfacher und schneller montiert oder gewartet werden. Erfindungsgemäß ist die Batterie bevorzugt eine Li-Ionen Batterie.

Durch den vordefinierten Anpressdruck wird vorteilhaft ein möglichst geringer thermischer Übergangswiderstand zwischen der Unterseite des Batteriemoduls und der Kühlplatte erzeugt.

Dieser beträgt in einer bevorzugten Ausgestaltung der Erfindung mindestens 3 bar, noch bevorzugter mindestens 5 bar.

In einer weiteren bevorzugten Ausgestaltung der Erfindung ist vorgesehen, dass der direkte Kontakt der Unterseite des Batteriemoduls mit der Oberseite der Kühlplatte wärmeleitend ausgebildet ist. Hiermit ist vorteilhaft eine effiziente Ableitung der Wärme des Batteriemoduls möglich.

In einer weiteren bevorzugten Ausgestaltung der Erfindung ist vorgesehen, dass das wenigstens eine Fixierband flach ausgebildet ist, zumindest die auf dem Batteriemodul aufliegende Seite des Bandes. Damit wird vorteilhaft bei gleicher Kraft ein geringerer Druck auf die Batteriezellen, insbesondere auf die beiden äußeren Batteriezellen des Batteriemoduls, ausgeübt. Die Fixierbänder sind damit zudem selbst geringer belastet und nehmen gleichzeitig weniger Raum in Anspruch.

In einer weiteren bevorzugten Ausgestaltung der Erfindung ist vorgesehen, dass das wenigstens eine Fixierband aus Metall ist. Die Materialeigenschaften des Metalls, insbesondere die hohe Zugfestigkeit und der hohe Wärmeleitkoeffizient, bieten vorteilhaft einerseits eine gute Dauerfestigkeit der Konstruktion und andererseits die Möglichkeit, mit dem Fixierband gleichzeitig auch eine Kühlfunktion auszuüben.

In einer weiteren bevorzugten Ausgestaltung der Erfindung ist vorgesehen, dass das wenigstens eine Fixierband aus zwei unter Zugspannung zusammengefügten Teilfixierbändern gebildet ist. Hiermit ist das Fixierband in vorteilhafter Weise in einem effizienten Verfahrensschritt dauerhaft gespannt. Die Teilfixierbänder erlauben zudem eine einfache Positionierung des wenigstens einen Batteriemoduls.

In einer weiteren bevorzugten Ausgestaltung der Erfindung ist vorgesehen, dass die Unterseite des Batteriemoduls in ihrer Gesamtheit die Oberseite der Kühlplatte direkt kontaktiert. Hiermit ist das Batteriemodul mit der größtmöglichen Fläche seiner Unterseite mit der Kühlplatte verbunden, wodurch vorteilhaft der Kühleffekt verstärkt wird.

Bevorzugt ist das mindestens eine Fixierband mit einem Befestigungsmittel an und/oder auf der Kühlplatte befestigt.

In einer weiteren bevorzugten Ausgestaltung der Erfindung ist vorgesehen, dass die Kühlplatte Kühlmittelkanäle aufweist. Mittels der Kühlkanäle kann die Kühlplatte vorteilhaft von Kühlmittel durchströmt und eine erhöhte Kühlleistung erzielt werden.

Erfindungsgemäß wird zudem ein Kraftfahrzeug bereitgestellt, mit einer Batterie in den zuvor genannten Ausgestaltungen, wobei die Batterie mit einem Antriebssystem des Kraftfahrzeugs verbunden ist. Die Vorteile der erfindungsgemäßen Batterie als Bauteil kommen so auch dem Kraftfahrzeug als Baugruppe zugute.

Vorteilhafte Weiterbildungen der Erfindung sind in den Unteransprüchen angegeben und in der Beschreibung beschrieben.

Der Begriff Batterie schließt in dieser Anmeldung auch Batteriesysteme, Akkumulatorbatterien, Akkumulatoren, Akkumulatorsysteme, insbesondere Li-Ionen-Systeme oder Li-Polymer-Ionen-Systeme mit ein.

### Zeichnungen

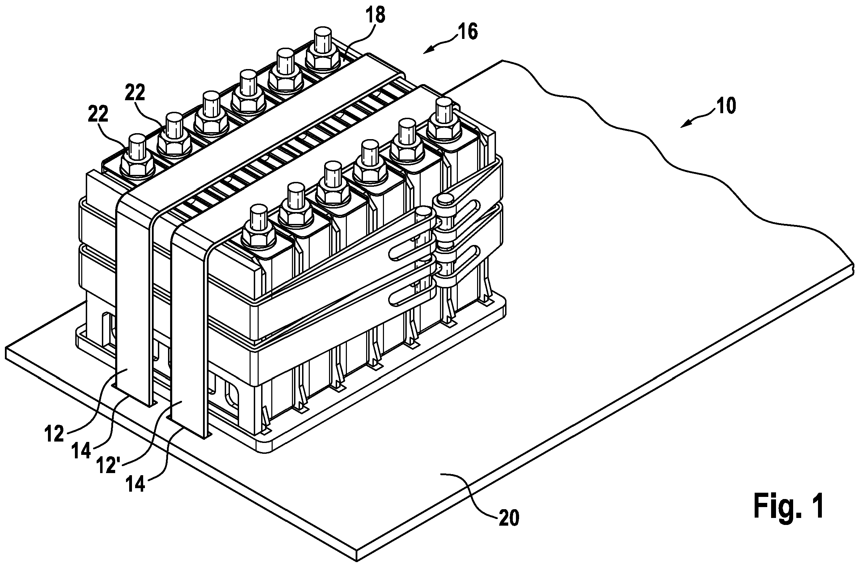

Die Erfindung wird anhand einer Zeichnung und der nachfolgenden Beschreibung näher erläutert. Figur 1 zeigt eine erfindungsgemäße Anordnung eines Batteriemoduls auf einer Kühlplatte.

### Ausführungsformen der Erfindung

In Fig. 1 ist ein Beispiel einer erfindungsgemäßen Kühlplatte 10 abgebildet. Diese weist eine Oberseite 20 auf. An der Kühlplatte 10 sind hier zwei Fixierbänder, ein erstes Fixierband 12 und ein zweites Fixierband 12' angeordnet. Mittels der Fixierbänder 12, 12' ist ein Batteriemodul 16 auf der Oberseite 20 der Kühlplatte 10 fixiert. Das Batteriemodul 16 ist bevorzugt aus mehreren in Reihe angeordneten Batteriezellen 18 gebildet. Die Unterseite des Batteriemoduls 16 ist dabei vorzugsweise so gestaltet, dass das Batteriemodul 16 mit seiner Unterseite auf der Oberseite 20 der Kühlplatte 10 flächig aufliegt.

Die Kühlplatte 10 dient einer Temperierung des zumindest einen Batteriemoduls 16. Dazu ist die Kühlplatte 10 vorzugsweise aus Metall gefertigt, da Metalle einen hohen Wärmeleitkoeffizienten besitzen. Das Batteriemodul 16 steht nach einer Montage direkt mit der Kühlplatte 10 in Kontakt. Bevorzugt kontaktiert die Unterseite des Batteriemoduls 16 die Oberseite 20 der Kühlplatte 10 direkt. Dabei ist die Unterseite des Batteriemoduls 16 wärmeleitend mit der Oberseite 20 der Kühlplatte 10 verbunden, bevorzugt die gesamte Unterseite des Batteriemoduls 16. Ein Luftspalt, der einen Wärmeleitwiderstand darstellt, ist zwischen der Unterseite des Batteriemoduls 16 und der Oberseite 20 der Kühlplatte 10 nicht vorhanden. Möglich ist auch, dass die Unterseite des Batteriemoduls 16 oder die Oberseite 20 der Kühlplatte 10 mit Wärmeleitpaste ausgebildet ist, um den Wärmeleitwiderstand weiter zu verringern.

Erfindungsgemäß ist es auch möglich, dass die Kühlplatte 10 Kühlmittelkanäle aufweist, durch welche ein fluides Kühlmittel strömen und so eine zusätzliche Kühlleistung erzeugen kann.

Fig. 1 zeigt beispielhaft, aber nicht beschränkend, die Verwendung von zwei Fixierbändern 12, 12' zur Fixierung eines Batteriemoduls 16. Es kann aber auch in der Fig. 1 nur ein Fixierband 12 oder es können mehr als zwei Fixierbänder 12 verwendet werden. Die Fixierbänder 12, 12' sind in Fig. 1 beabstandet zueinander an der Kühlplatte 10 angeordnet. Erfindungsgemäß sind die Fixierbänder 12, 12' vorzugsweise aus Metall. Sie können aber auch aus Kunststoff oder aus einem Verbund aus Kunststoff und Metall ausgeführt sein. Sie sind vorzugsweise im Wesentlichen flach gestaltet, bevorzugt ist wenigstens die Seite des Fixierbandes 12, 12' eben ausgebildet, die auf dem Batteriemodul 16 aufliegt. Jedes Fixierband 12, 12' ist dabei bevorzugt, aber nicht beschränkend, an zwei voneinander entfernten Stellen der Kühlplatte 10 durch Aussparungen 14 in der Kühlplatte 10 geführt und bildet im montierten Zustand mit der Kühlplatte 10 eine geschlossene Form. Wenigstens ein erster Abschnitt und ein dritter Abschnitt des Fixierbandes 12, 12' sind damit unterhalb der Kühlplatte 10 und ein zweiter Abschnitt des Fixierbandes 12, 12' ist oberhalb der Kühlplatte 10 angeordnet, wobei mit oberhalb der Raum definiert sein soll, dem die Oberseite 20 der Kühlplatte 10 zugewandt ist und mit unterhalb der Raum, dem die Oberseite 20 der Kühlplatte 10 abgewandt ist. Der zweite Abschnitt des Fixierbandes 12, 12' ist damit zwischen dem ersten Abschnitt und dem dritten Abschnitt angeordnet.

Der erste Abschnitt und der dritte Abschnitt des Fixierbandes 12, 12' weisen erfindungsgemäß Befestigungsmittel auf, mit denen das Fixierband 12, 12' mit der Kühlplatte 10 verbunden ist. Diese Befestigungsmittel können beispielsweise Elemente mit einer im Vergleich zu den Aussparungen 14 größeren Dimension sein, die durch Ihre Größe ein Hindurchrutschen des Fixierbandes 12, 12' durch die Aussparungen 14 verhindern. Dies können z. B. Klammern sein, durch die die Abschnitte so geführt werden, dass sie fixiert sind. Es ist erfindungsgemäß auch möglich, dass der erste Abschnitt des Fixierbandes 12, 12' mit dem dritten Abschnitt des Fixierbandes 12, 12' unterhalb der Kühlplatte 10 verbunden ist. In dieser Ausgestaltung können die Befestigungsmittel entfallen. In einem Ausführungsbeispiel kann das Fixierband 12, 12' ein geschlossenes, elastisches Band sein. Bevorzugt besteht ein Fixierband 12, 12' jedoch aus mehreren Teilabschnitten.

Die oberhalb der Kühlplatte 10 verlaufenden Abschnitte der Fixierbänder 12 und 12' liegen dabei in Fig. 1 an drei Seiten des Batteriemoduls 16 an. Ein Aufliegen auf der der Unterseite des Batteriemoduls 16 gegenüberliegenden Seite des Batteriemoduls 16 gewährt dabei die Fixierung des Batteriemoduls 16 auf der Kühlplatte 10. In Fig. 1 stellt diese Seite die Terminalseite dar. Die Fixierbänder 12 und 12' verlaufen dabei jeweils zwischen den zwei Terminals einer Batteriezelle 18. Sie stellen dabei keinen elektrischen Kontakt zwischen den Terminals 22 her.

Erfindungsgemäß kann, abweichend von der Darstellung in Fig.1, die der Unterseite des Batteriemoduls 16 gegenüberliegende Seite des Batteriemoduls 16 auch eine andere als die Terminalseite sein.

Bei einer Montage der erfindungsgemäßen Batterie wird wenigstens ein Fixierband 12, 12' um wenigstens ein Batteriemodul 16 herumgeführt, gespannt und fixiert. Das Fixierband 12, 12' bleibt durch das positionierte Batteriemodul 16 nach der Montage gespannt. Das Spannen und Fixieren kann dabei auf mehrere Arten erfolgen.

Vorzugsweise werden zwei Teilstücke des wenigstens einen Fixierbandes 12, 12' nach Anordnung des zu fixierenden Batteriemoduls 16 mit einer entsprechenden Vorrichtung aneinander gefügt und dann miteinander verspannt. In Fig. 1 bestünde ein Fixierband 12 demzufolge aus einem linken und einem rechten Teilstück, welche zunächst voneinander getrennt sind. Nach der Platzierung des Batteriemoduls 16 zwischen dem linken und rechten Teilstück des Fixierbandes 12, 12' werden beide Teilstücke über das Batteriemodul 16 geführt und miteinander verbunden. Bevorzugt werden die Teilstücke nach der Verbindung zur Erhöhung des Anpressdruckes miteinander verspannt. Das Fügen kann dabei durch Schweißen, Kleben oder vorzugsweise Clinchen bzw. Toxen geschehen. Auch mittels eines Gewindes, beispielsweise eines Schneckengewindes nach Art einer Schneckengewindeschelle, kann das Fixierband 12, 12' gespannt und fixiert werden.

In einem Ausführungsbeispiel wird das Fixierband 12, 12' zunächst während der Positionierung des Batteriemoduls 16 gedehnt und dann das Batteriemodul 16 zwischen Kühlplatte 10 und das Fixierband 12, 12' geschoben, vorzugsweise bei einer Ausgestaltung des Fixierbandes 12, 12' aus Kunststoff.

In einer erfindungsgemäßen Batterie können auch Fixierbänder 12, 12' in verschiedenen zuvor beschriebenen Ausgestaltungen gleichzeitig angeordnet sein.

Das mindestens eine Fixierband 12, 12' bzw. die Teilstücke des mindestens einen Fixierbandes 12, 12' sind dabei vor Anordnung des Batteriemoduls 16 auf und/oder an der Kühlplatte 10 mittels eines Befestigungsmittels befestigt, so dass zur Anordnung des Batteriemoduls 16 die Unterseite der Kühlplatte 10 nicht mehr zugänglich sein oder gedreht werden muss.

Ist das Batteriemodul 16 angeordnet und ist das wenigstens eine Fixierband 12, 12' gespannt, so übt das Fixierband 12, 12' durch elastische Verformung eine kontinuierliche Kraft im Wesentlichen senkrecht und in Richtung zur Oberseite 20 auf das Batteriemodul 16 aus. Dadurch ist das Batteriemodul 16 mit einem definierten Anpressdruck auf der Kühlplatte 10 angeordnet. Der definierte Anpressdruck gewährleistet einen möglichst geringen thermischen Übergangswiderstand zwischen Batteriemodul 16 und Kühlplatte 10. Er liegt erfindungsgemäß bei mindestens 3 bar, noch bevorzugter bei 5 bar.

Die Anzahl der Fixierbänder 12, 12' beschränkt sich erfindungsgemäß nicht auf zwei, gemäß dem Ausführungsbeispiel in Fig. 1. Es kann auch nur ein einziges Fixierband 12, 12' oder es können mehr als zwei Fixierbänder 12, 12' angeordnet sein. Mit jedem Fixierband 12, 12' kann dabei auch, anders als in Fig.1, mehr als ein Batteriemodul 16 fixiert sein.

## Patentansprüche

1. Batterie mit wenigstens einem Batteriemodul (16) mit einer Unterseite, einer Kühlplatte (10) mit einer Oberseite (20) und einem auf der Oberseite (20) der Kühlplatte (10) angeordneten und mit der Kühlplatte (10) verbundenen Befestigungssystem für das wenigstens eine Batteriemodul (16), wobei das Befestigungssystem wenigstens ein Fixierband (12, 12') aufweist und mittels des wenigstens einen Fixierbandes (12, 12') das wenigstens eine Batteriemodul (16) derart auf der Kühlplatte (10) befestigt ist, dass die Unterseite des Batteriemoduls (16) in direktem Kontakt mit der Oberseite (20) der Kühlplatte (10) steht,
**dadurch gekennzeichnet, dass**
die Kühlplatte (10) wenigstens zwei zueinander beabstandete Aussparungen (14) aufweist, welche jeweils als eine von der Oberseite (20) der Kühlplatte (10) zu einer Unterseite (20) der Kühlplatte (10) durch die Kühlplatte (10) hindurch verlaufende Öffnung ausgebildet sind,
wobei die Unterseite der Kühlplatte (10) an einer zu der Oberseite (20) gegenüberliegende Seite der Kühlplatte (10) angeordnet ist und das wenigstens eine Fixierband (12, 12') durch die als Öffnung ausgebildete Aussparungen (14) in der Weise durch die Kühlplatte (10) hindurch geführt ist, dass ein Abschnitt des wenigstens einen Fixierbandes (12, 12') oberhalb der Kühlplatte (10) und mindestens ein weiterer Abschnitt des wenigstens einen Fixierbandes (12, 12') unterhalb der Kühlplatte (10) angeordnet ist.

2. Batterie nach Anspruch 1, wobei mittels des Befestigungssystems das wenigstens eine Batteriemodul (16) auf der Kühlplatte (10) mit einem vordefinierten Anpressdruck befestigt ist, bevorzugt mit einem Anpressdruck von mindestens 3 bar, noch bevorzugter von mindestens 5 bar.

3. Batterie nach Anspruch 1 oder 2, wobei der direkte Kontakt der Unterseite des Batteriemoduls (16) mit der Oberseite (20) der Kühlplatte (10) wärmeleitend ausgebildet ist.

4. Batterie nach einem der vorhergehenden Ansprüche, wobei das wenigstens eine Fixierband (12, 12') flach ausgebildet ist.

5. Batterie nach einem der vorhergehenden Ansprüche, wobei das wenigstens eine Fixierband (12, 12') aus Metall ist.

6. Batterie nach einem der vorhergehenden Ansprüche, wobei das wenigstens eine Fixierband (12, 12') aus zwei unter Zugspannung zusammengefügten Teilfixierbändern gebildet ist.

7. Batterie nach einem der vorhergehenden Ansprüche, wobei die Unterseite des Batteriemoduls (16) in ihrer Gesamtheit die Oberseite (20) der Kühlplatte (10) direkt kontaktiert.

8. Kraftfahrzeug mit einer Batterie nach einem der Ansprüche 1 bis 7, wobei die Batterie mit einem Antriebssystem des Kraftfahrzeugs verbunden ist.

## Claims

1. Battery having at least one battery module (16) having a lower face, a cooling plate (10) having an upper face (20) and a fastening system for the at least one battery module (16), which fastening system is arranged on the upper face (20) of the cooling plate (10) and is connected to the cooling plate (10), wherein the fastening system comprises at least one fixing strap (12, 12') and the at least one battery module (16) is fastened to the cooling plate (10) by means of the at least one fixing strap (12, 12') in such a manner that the lower face of the battery module (16) is in direct contact with the upper face (20) of the cooling plate (10),
**characterized in that**
the cooling plate (10) comprises at least,two cut-outs (14) that are arranged in a mutually spaced disposition and that are each embodied as an opening which extends from the upper face (20) of the cooling plate (10) to a lower face (20) of the cooling plate (10) through the cooling plate (10), wherein the lower face of the cooling plate (10) is arranged on a face of the cooling plate (10) which lies opposite the upper face (20), and the at least one fixing strap (12, 12') is guided through the cut-outs (14) embodied as an opening, through the cooling plate (10), in the manner that a section of the at least one fixing strap (12, 12') is arranged above the cooling plate (10) and at least a further section of the at least one fixing strap (12, 12') is arranged below the cooling plate (10).

2. Battery according to Claim 1, wherein by means of the fastening system the at least one battery module (16) is fastened to the cooling plate (10) with a predefined contact pressure, preferably with a contact pressure of at least 3 bar, more preferably of at least 5 bar.

3. Battery according to Claim 1 or 2, wherein the direct contact of the lower face of the battery module (16) with the upper face (20) of the cooling plate (10) is embodied in a heat conducting manner.

4. Battery according to any one of the preceding claims, wherein the at least one fixing strap (12, 12') is embodied in a planar manner.

5. Battery according to any one of the preceding claims, wherein the at least one fixing strap (12, 12') is made from metal.

6. Battery according to any one of the preceding claims, wherein the at least one fixing strap (12, 12') is embodied from two part-fixing straps that are joined together under tensile stress.

7. Battery according to any one of the preceding claims, wherein the lower face of the battery module (16) directly contacts in its entirety the upper face (20) of the cooling plate (10).

8. Motor vehicle having a battery in accordance with any one of Claims 1 to 7, wherein the battery is connected to a drive system of the motor vehicle.

## Revendications

1. Batterie, avec au moins un module de batterie (16) avec une face inférieure, une plaque de refroidissement (10) avec une face supérieure (20) et un système de fixation, disposé sur la face supérieure (20) de la plaque de refroidissement (10) et raccordé à la plaque de refroidissement (10), pour le module de batterie (16) au moins au nombre de un, le système de fixation présentant au moins une bande de fixation (12, 12'), et le module de batterie (16) au moins au nombre de un étant fixé sur la plaque de refroidissement (10) au moyen de la bande de fixation (12, 12') au moins au nombre de un de telle sorte que la face inférieure du module de batterie (16) est en contact direct avec la face supérieure (20) de la plaque de refroidissement (10),
**caractérisée en ce que**
la plaque de refroidissement (10) présente au moins deux évidements (14) espacés l'un de l'autre qui sont respectivement constitués en tant qu'orifice traversant la plaque de refroidissement (10) à partir de la face supérieure (20) de la plaque de refroidissement (10) vers une face inférieure (20) de la plaque de refroidissement (10),
la face inférieure de la plaque de refroidissement (10) étant disposée sur une face de la plaque de refroidissement (10) opposée à la face supérieure (20), et la bande de fixation (12, 12') au moins au nombre de un étant guidée à travers la plaque de refroidissement (10) par les évidements (14) constitués en tant qu'orifice de telle sorte qu'un tronçon de la bande de fixation (12, 12') au moins au nombre de un est disposé au-dessus de la plaque de refroidissement (10), et qu'au moins un autre tronçon de la bande de fixation (12, 12') au moins au nombre de un est disposé au-dessous de la plaque de refroidissement (10).

2. Batterie selon la revendication 1, le module de batterie (16) au moins au nombre de un étant fixé sur la plaque de refroidissement (10) avec une pression de compression prédéfinie au moyen du système de fixation, de préférence avec une pression de compression d'au moins 3 bars, de façon plus préférentielle d'au moins 5 bars.

3. Batterie selon la revendication 1 ou 2, le contact direct de la face inférieure du module de batterie (16) avec la face supérieure (20) de la plaque de refroidissement (10) étant constitué de façon thermiquement conductrice.

4. Batterie selon l'une des revendications précédentes, la bande de fixation (12, 12') au moins au nombre de un étant constituée de façon plate.

5. Batterie selon l'une des revendications précédentes, la bande de fixation (12, 12') au moins au nombre de un étant en métal.

6. Batterie selon l'une des revendications précédentes, la bande de fixation (12, 12') au moins au nombre de un étant formée de deux bandes de fixation textiles assemblées en présence d'une contrainte de traction.

7. Batterie selon l'une des revendications précédentes, la face inférieure du module de batterie (16) contactant directement dans son ensemble la face supérieure (20) de la plaque de refroidissement (10).

8. Véhicule automobile doté d'une batterie selon l'une des revendications 1 à 7, la batterie étant raccordée à un système moteur du véhicule automobile.
